# EUROPEAN PATENT APPLICATION

(11) **EP 2 789 386 A1**
(43) Date of publication of application: **15.10.2014**
(21) Application number: 11877058.5
(22) Date of filing: 09.12.2011
(51) Int. Cl.: B01J 19/12, C01B 33/023

(54) **REDUCTION DEVICE**

(71) Applicant: YTS SCIENCE PROPERTIES PTE.LTD., Singapore 079903 (SG)
(72) Inventor: YABE Takashi, Tokyo 114-0013 (JP)
(74) Representative: Jones, Helen M.M.
(86) International application number: PCT/JP2011/078554
(87) International publication number: WO 2013/084351

(57) **Abstract**

High-purity silicon is collected, and the amount of carbon dioxide is effectively curtailed. Oxygen is released from the first or second oxide by irradiating a mixture or compound of a first oxide such as magnesium oxide, potassium oxide, or calcium oxide and a second oxide such as carbon dioxide or silicon monoxide with a laser.

## Description

### Technical Field

The present disclosure relates to reduction devices and particularly to a reduction device suitable for generating high-purity silicon and for curtailing carbon dioxide.

### Background Art

Patent Literature 1 discloses a hydrogen generation device by the present inventors, in which renewable energy is efficiently used, reaction energy is collected, and a hydrogen gas is generated. It is described that the hydrogen generation device comprises a reaction vessel in which a metal element is retained; a water tank for supplying water to the reaction vessel; a laser that heats a portion, in which the metal element is brought into contact with the water, to heat the metal element; and a hydrogen take-out pipe through which a hydrogen gas generated by reaction of the metal element with the water, and reaction energy are collected.

### Citation List

### Patent Literature

Patent Literature 1: Unexamined Japanese Patent Application Kokai Publication No. 2007-145686

### Summary of Invention

### Technical Problem

However, theoretically, while cleaving a bond between silicon and oxygen that constitute silicon dioxide or the like, silicon and oxygen can be spouted, and separated from a heating site, by applying a temperature of a boiling point or more to an oxide such as silicon monoxide or silicon dioxide using a laser under a predetermined condition. Accordingly, in such a case, silicon that can be used in a semiconductor material and/or the like can be collected.

For example, while cleaving a bond between carbon and oxygen, carbon and oxygen can also be spouted, and separated from a heating site, by applying a temperature of a boiling point or more to carbon dioxide using a laser under a predetermined condition. Accordingly, it is expected that in such a case, the amount of carbon dioxide which is considered to be a cause of global warming can be curtailed.

However, it is difficult to choose the "predetermined condition", and setting aside a theoretical problem, it is very difficult to practically collect high-purity silicon and effectively curtail the amount of carbon dioxide.

### Solution to Problem

As a result of research and experiment, the present inventors succeeded in finding the "specified condition" described above. In other words, the reduction device of the present disclosure irradiates a mixture or compound of a first oxide (for example, magnesium oxide, potassium oxide, or calcium oxide) and a second oxide (for example, carbon dioxide or silicon monoxide) with a laser to thereby release oxygen from the first or second oxide.

In other words, in the present disclosure, oxygen is typically released from carbon dioxide or silicon monoxide, or magnesium oxide, potassium oxide, calcium oxide, or the like not by simply irradiating carbon dioxide or silicon monoxide with a laser but by irradiating carbon dioxide or silicon monoxide with a laser in the state of being mixed or chemically combined with magnesium oxide, potassium oxide, calcium oxide, or the like.

More specifically, for example, in a case in which magnesium oxide is selected as the first oxide, silicon oxide is selected as the second oxide, and a mixture thereof is produced, Mg, O₂, Si, and/or the like are generated by irradiating the mixture with a laser with required intensity, and in other words, high-purity silicon (Si) can be collected.

The laser can also be a solid-state laser, a gas laser, or a semiconductor laser in which an energy source including sunlight is utilized. Thereby, new reduction treatment that is friendly to the global environment without using a power source derived from fossil fuel is enabled by realizing a laser generated from sunlight or natural energy.

### Brief Description of Drawings

FIG. 1 is a schematic configuration view of a laser reduction device of an embodiment 1 of the present disclosure;
FIG. 2 is a schematic configuration view of a laser reduction device of an embodiment 2 of the present disclosure;
FIG. 3 is a schematic configuration view of a laser reduction device of an embodiment 3 of the present disclosure;
FIG. 4 is a relationship view of a mixing ratio between magnesium oxide and silicon monoxide, a magnesium fraction and a silicon fraction [mass%], and an energy efficiency [mg/kJ];
FIG. 5 is a schematic configuration view of a laser reduction device of an embodiment 4 of the present disclosure;
FIG. 6 is a relationship view of an initial pressure [Pa] in a treatment chamber 1 of FIG. 1, a magnesium fraction [mass%], and an energy efficiency [mg/kJ]; and
FIG. 7 is a relationship view of a mixing ratio between magnesium oxide and silicon monoxide, and the total amount of acquired, spherical, highly-concentrated silicon.

### Description of Embodiments

Embodiments of the present disclosure will be explained below with reference to the drawings. In each drawing, a similar portion is given the same sign.

### (Embodiment 1)

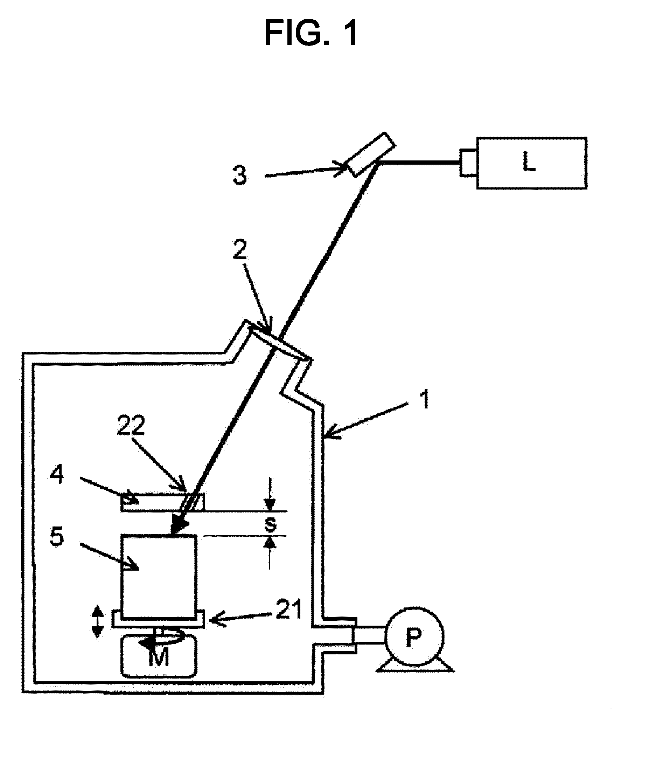

FIG. 1 is a schematic configuration view of a laser reduction device of an embodiment 1 of the present disclosure. In FIG. 1, a treatment chamber 1, which is also referred to generally as a chamber, is represented. An exhaust pump P is attached to the treatment chamber 1, and air is exhausted from the inside of the treatment chamber 1, if necessary.

In the treatment chamber 1, a gas introduction pipe, which is not illustrated, is placed, and a nitrogen gas, an argon gas, a helium gas, a neon gas, an inert gas, and/or the like can also be selectively introduced into the treatment chamber 1.

In the treatment chamber 1, a stage 21, on which, for example, a cylindrical vessel 5 is put, is placed. In the vessel 5, a mixture obtained by stirring, for example, magnesium oxide that is the first oxide and silicon monoxide that is the second oxide is mainly stored.

In the present embodiment, silicon monoxide is generated by irradiating abundant silicon dioxide on the Earth with a laser using the laser reduction device illustrated in FIG. 1. Accordingly, a stored substance in the vessel 5 may also become, for example, silicon dioxide or the like that is not a mixture of the first oxide and the second oxide. In fact, a technique for acquiring silicon monoxide that is the second oxide is not limited thereto.

The stored substance in the vessel 5 can also be, for example, magnesium oxide that adsorbs carbon dioxide, that is, a compound of carbon dioxide and magnesium oxide. It is known that magnesium oxide adsorbs carbon dioxide. Magnesium oxide adsorbs carbon dioxide in atmospheric air when being left standing in the atmospheric air, for example, for a few days. In the present embodiment, it can also be intended that carbon dioxide is decomposed into oxygen and carbon to curtail carbon dioxide by irradiating magnesium oxide that adsorbs carbon dioxide with a laser.

First, an outline of a technique for generating silicon monoxide from silicon dioxide will be given. Silicon dioxide is stored in the vessel 5, and is irradiated with a laser from a laser irradiation device L under a condition where temperature at a position where a spot diameter is formed is not less than 2230°C, which is the boiling point of silicon, (for example, 2500°C to 5000°C).

As a result, oxygen is separated from silicon dioxide to obtain silicon monoxide. In the present embodiment, silicon monoxide obtained in such a manner is mixed with magnesium oxide and/or the like as described above and is stored in the vessel 5. The mixing ratio thereof is important for efficiently extracting silicon or magnesium from the mixture of silicon monoxide and magnesium oxide. The importance will be described below with experimental results.

A motor M that rotates the stage 21 and moves the stage 21 up and down is attached to the stage 21. The rotation of stage 21 is a treatment for distributedly irradiating a stored substance in the vessel 5 with a laser.

The moving up and down of the stage 21 is a treatment for irradiating a stored substance in the vessel 5 with a laser in the same spot diameter. Accordingly, it should be noted that it is not always essential to perform the treatments.

An adhesion medium 4 to which silicon monoxide that is an evaporated substance from silicon dioxide is allowed to adhere is placed at a predetermined spacing S above the vessel 5. In the present embodiment, the evaporated substance is allowed to adhere to the adhesion medium 4 by allowing the evaporated substance to collide with the adhesion medium 4 in a process for cooling the evaporated substance.

Although an example of adoption of the plate-shaped adhesion medium 4 is illustrated in FIG. 1, adhesion media 4 with various shapes can be used as the other embodiments described below. For the adhesion medium 4, any material may be adopted as long as the material satisfies the heat resistance condition that the material is not melted by the heat of the evaporated substance adhering to the adhesion medium 4. In the present embodiment, a copper plate is used for the adhesion medium 4.

Further, a pore 22 for preventing a laser irradiated from the laser irradiation device L from being shielded is formed in the adhesion medium 4. Although the formation angle of the pore 22 is made to be parallel to the laser in FIG. 1, the angle is not limited thereto as long as the laser arrives at the stored substance in the vessel 5.

The predetermined spacing S is a spacing at which an evaporated substance of silicon monoxide sublimated from silicon dioxide in the vessel 5 can be allowed to efficiently adhere to the adhesion medium 4. A specific example is described as follows: the vacuum degree of the inside of the treatment chamber 1 can be allowed to be about 6 Pa by the pump P, and the predetermined spacing S can be allowed to be, for example, around 5 mm to 15 mm when copper is adopted as the material of the adhesion medium 4.

In an actual experiment, a non-oxygen evaporated substance was able to be allowed to adhere to the adhesion medium 4 when the predetermined spacing S was 25 mm or less. When the predetermined spacing S was about 7 mm to about 14 mm, an effect twice or more that in the case of about 5 mm was obtained. Further, when the predetermined spacing S was about 8 mm to about 12 mm, an effect 2.5 times or more that in the case of about 5 mm was obtained.

On the other hand, when the amount of oxygen remaining in the treatment chamber 1 is extremely reduced by introducing an inert gas and/or the like into the treatment chamber 1 or by lowering pressure in the treatment chamber 1, the inner wall of the treatment chamber 1 can also double as the adhesion medium. In such a case, the evaporated substance adheres to the periphery of the pump P attached to the treatment chamber 1 due to exhaust from the pump P.

In the upper portion of the treatment chamber 1, a known entrance window 2 is placed in order to capture a laser, irradiated from the laser irradiation device L, in the treatment chamber 1. In addition, a reflecting mirror 3 that changes the route of a laser irradiated from the laser irradiation device L toward the entrance window 2 is placed in the light path of the laser.

It is preferable to connect at least between the laser irradiation device L and the reflecting mirror 3 using an optical fiber or the like that is not illustrated. Similarly, connection between the reflecting mirror 3 and the entrance window 2 and, in addition, between the entrance window 2 and the vicinity of the vessel 5 may also be performed using an optical fiber or the like. Thereby, the optical loss of a laser arriving at the stored substance in the vessel 5 can be inhibited.

For the laser irradiation device L, for example, an irradiation device that performs irradiation with a solid-state laser, a gas laser, or a semiconductor laser of several kilowatts can be used. In various experiments described below, an irradiation device performing irradiation with a continuous light carbon dioxide laser was used.

The laser irradiation device L is preferably a solid-state laser, gas laser, or semiconductor laser irradiation device utilizing an energy source including sunlight.

For the kind of laser irradiation device, see PCT/2009/57671, incorporated herein by reference, non-public at the time of the present application, and filed by the present inventors.

Since the temperature applied to the stored substance in the vessel 5 depends on the power (kW) and spot diameter of a laser, selection thereof is important. Specifically, in the case of a laser of 1 kW and a spot diameter of about 2 mm, the temperature at a position where the spot diameter of the stored substance in the vessel 5 is about 5000°C.

Therefore, for evaporating silicon dioxide in the vessel 5 and for effectively separating silicon monoxide and oxygen, it is preferable to set a spot diameter to 2 mm or less when the laser irradiation device L that performs irradiation with a laser of 1 kW is used.

Preferably, setting of a spot diameter to 2 mm or less when the laser irradiation device L of 1 kW is used results in easy expansion of silicon dioxide at a laser irradiation position and enables thereafter rapid cooling of silicon monoxide to make it possible to efficiently collect silicon monoxide.

In addition, for example, when a spot diameter is set to 2 mm using the laser irradiation device of 1 kW, silicon dioxide is expanded to 2 cm at a laser irradiation position, and silicon monoxide is immediately cooled to a temperature of 100°C or less.

Temperature at the position of formation of the spot diameter of the stored substance in the vessel 5 can be allowed to be generally constant by keeping a constant value obtained by dividing the power (kW) of a laser by the spot area of a laser. Accordingly, for example, when a laser of 4 kW is used, the spot diameter is preferably about 4 mm.

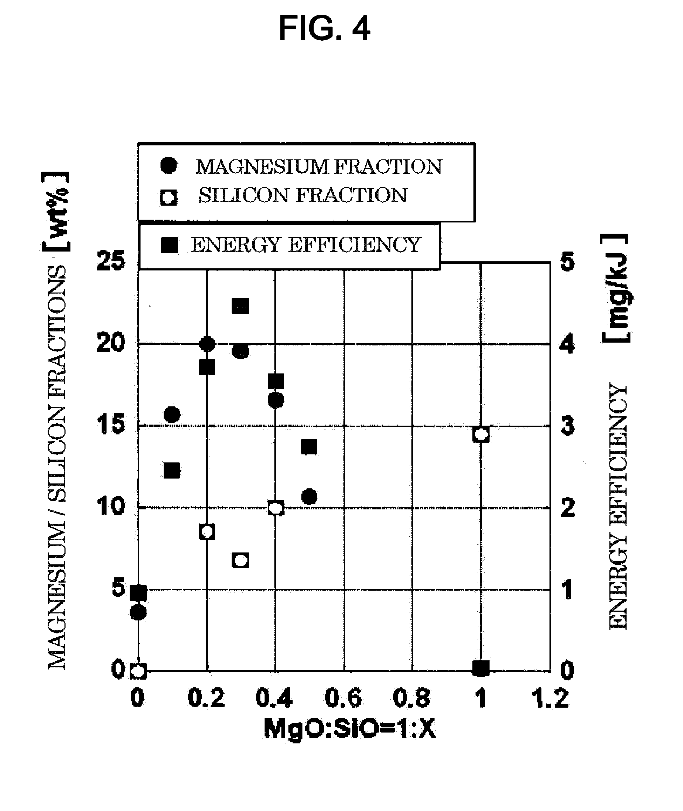

FIG. 4 is a relationship view of a mixing ratio between magnesium oxide and silicon monoxide, a magnesium fraction and a silicon fraction [mass%], and an energy efficiency [mg/kJ]. The mixing ratio between magnesium oxide and silicon monoxide is indicated on the horizontal axis of FIG. 4, the energy efficiency [mg/kJ] of magnesium is indicated on the right vertical axis of FIG. 4, and the magnesium fraction and the silicon fraction [mass%] are indicated on the left side vertical axis of FIG. 4.

The data indicated in FIG. 4 was acquired on the condition that an argon gas flows into the treatment chamber 1 and the inside of the treatment chamber 1 is at 1 atmospheric pressure. As indicated in FIG. 4, the amount of acquired silicon adhering to the copper plate as the adhesion medium 4 is found to be linearly increased with increasing the mixing ratio of silicon monoxide to magnesium oxide. Accordingly, in order to efficiently acquire silicon, it is preferable to increase the mixing ratio of silicon monoxide to magnesium oxide. It was able to be confirmed that the amount of acquired silicon was linearly increased even when the mixing ratio of [silicon monoxide/magnesium oxide] was increased to " 1:2" or "1:3", although the confirmation is not indicated in FIG. 4.

In addition, generally spherical, high-purity silicon was obtained on the target 5 rather than on the adhesion medium 4. At the stage, each component in the silicon was analyzed. The analysis results are listed in Table 1.

**[Table 1]**

| | 1 | 2 | 3 | 4 |
|---|---|---|---|---|
| Si | 98.7738 | 98.9152 | 99.0575 | 99.0343 |
| O | 1.2262 | 1.0848 | 0.9425 | 0.9657 |
| Mg | - | - | - | - |

As listed in Table 1, each was silicon with a high purity of 98% or more, and only a slight amount of oxygen was present in each silicon. Since the levels of other components are less than the detection limit, it may be considered that the other components are not substantially contained in the high-purity silicon.

As indicated in FIG. 4, it was found that the mixing ratio between magnesium oxide and silicon monoxide also affects the efficiency of reducing magnesium. In the case of magnesium oxide:silicon monoxide=1:0.2 to 0.3, the magnesium fraction was about 20 mass%.

Further, the energy efficiency is supposed to correlate with a variation in the efficiency of reducing magnesium.

The above experimental results reveal that adjustment of the mixing ratio between magnesium oxide and the silicon monoxide can result in increase or decrease of the amount of acquired silicon and in change of the efficiency of reducing magnesium. In fact, the higher mixing ratio of silicon monoxide to magnesium oxide is better judging from the efficiency of acquiring silicon as mentioned already, and therefore the mixing ratio is preferably determined depending on the application. Mixing means comprising means for metering silicon monoxide and magnesium oxide, a machine for stirring silicon monoxide and magnesium oxide, and the like is preferably used for mixing silicon monoxide and magnesium oxide.

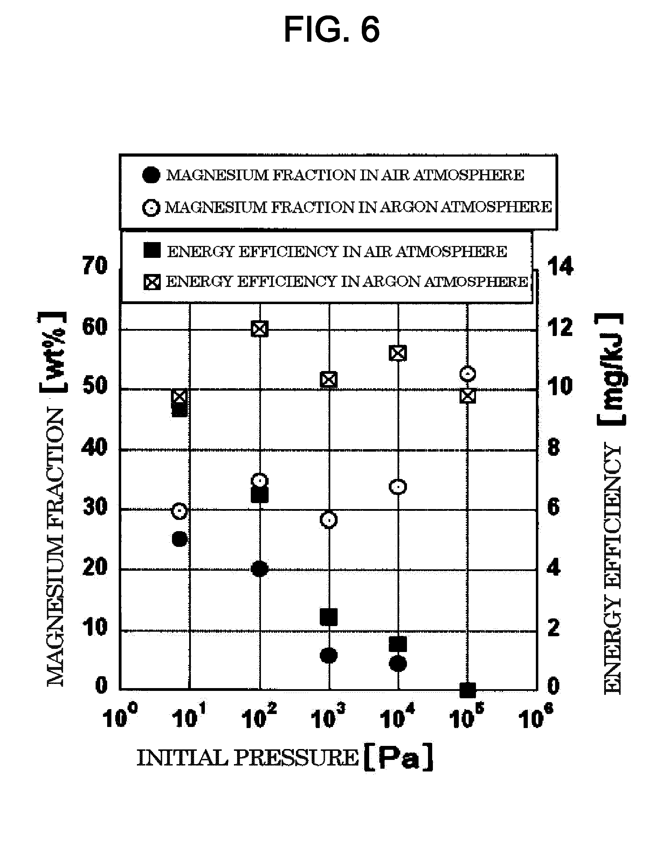

FIG. 6 is a relationship view of an initial pressure [Pa] in a treatment chamber 1 of FIG. 1, a magnesium fraction [mass%], and an energy efficiency [mg/kJ]. In the case of focusing attention on a magnesium fraction in air atmosphere, it is found that the magnesium fraction in the air atmosphere is decreased with increasing the initial pressure [Pa] in the treatment chamber 1. Next, in the case of focusing attention on an energy efficiency in air atmosphere, it is found that the energy efficiency in the air atmosphere is similarly decreased with increasing the initial pressure [Pa] in the treatment chamber 1.

In contrast, in the case of a magnesium fraction in argon atmosphere, it is found that the magnesium fraction in the argon atmosphere is increased with increasing the initial pressure [Pa] in the treatment chamber 1. In addition, it is supposed that an energy efficiency in argon atmosphere is not so affected by the initial pressure [Pa] in the treatment chamber 1.

FIG. 6 reveals that magnesium can be more effectively collected in treatment in the argon atmosphere than in treatment in the air atmosphere and that the higher initial pressure in the treatment chamber 1 can result in more effective collection of magnesium.

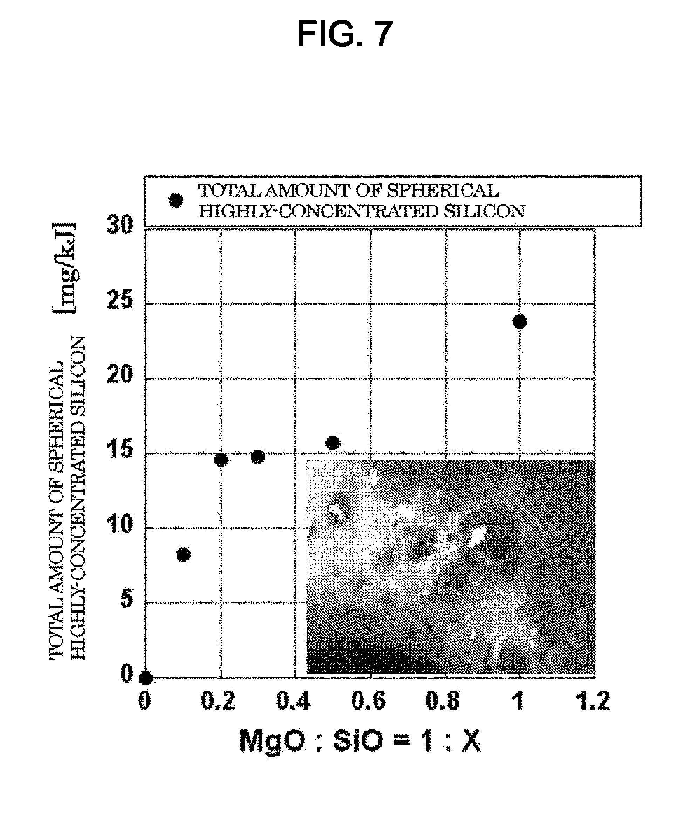

FIG. 7 is a relationship view of a mixing ratio between magnesium oxide and silicon monoxide, and the total amount of spherical, highly-concentrated silicon acquired on the target 5. First, as added to FIG. 7, spheres of highly-concentrated silicon appeared on the surface of the mixture of magnesium oxide and silicon monoxide in the vessel 5, the general diameter thereof was around 200 µm when the ratio of magnesium oxide and silicon monoxide was around 1:1, the diameter was increased with increasing the ratio, and the diameter was 1 mm when the ratio between magnesium oxide and silicon monoxide is 1:3. As a result of measuring the purity of the spheres of the silicon, the purity was 99% or more.

In addition, as is apparent from FIG. 7, the total amount of highly-concentrated silicon is also increased with increasing the mixing ratio of silicon monoxide to magnesium oxide. It is predicted from FIG. 7 that a larger number of the spheres of highly-concentrated silicon can be acquired by further increasing the mixing ratio.

### (Embodiment 2)

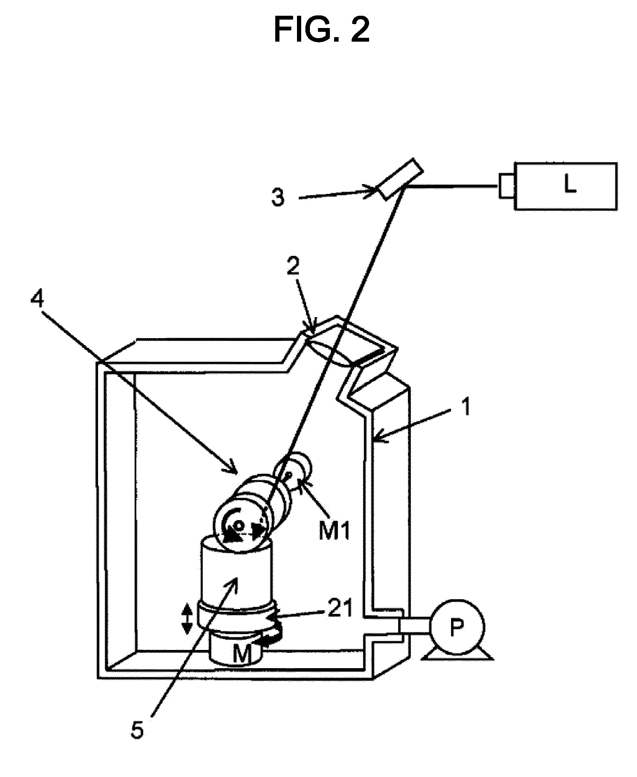

FIG. 2 is a schematic configuration view of a laser reduction device of an embodiment 2 of the present disclosure. FIG. 2 illustrates the laser reduction device obtained by changing the laser reduction device of FIG. 1 in such manners that:
(1) the shape of the adhesion medium 4 is changed from a one-plate-shape to a two-disk-shape; and
(2) the disk-shaped adhesion medium 4 is allowed to be rotatable, and a motor M1 linked to the adhesion medium 4 is placed therefor.

Silicon monoxide can be allowed to homogeneously adhere to the adhesion medium 4 by allowing the adhesion medium 4 to be rotatable. For example, the rotational speed of the adhesion medium 4 is preferably around 1 rpm to 20 rpm.

### (Embodiment 3)

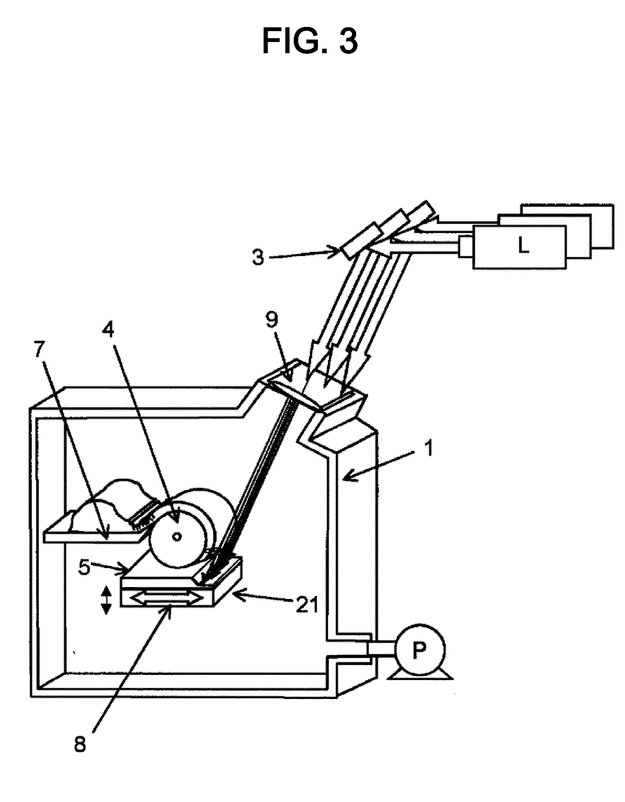

FIG. 3 is a schematic configuration view of a laser reduction device of an embodiment 3 of the present disclosure. FIG. 3 illustrates the laser reduction device obtained by changing the laser reduction device of FIG. 1 in such manners that:
(1) plural laser irradiation devices L are placed;
(2) a lens array 9 for concentrating a laser irradiated from each laser irradiation device L into a stored substance in a vessel 5 is attached to a treatment chamber 1 since the plural laser irradiation devices L are placed;
(3) the adhesion medium 4 is changed to a rotatable adhesion medium having a cylindrical shape;
(4) since the cylindrical adhesion medium 4 is adopted, a stage 21 is allowed to be able to move in a horizontal direction so that the stored substance in the vessel 5 is irradiated with a laser; and
(5) collecting means 7 which collects an evaporated substance adhering to the adhesion medium 4 is placed.

First, the evaporation amount of the stored substance in the vessel 5 can be increased by placing the plural laser irradiation devices L. Accordingly, the laser reduction device illustrated in FIG. 3 has the increased efficiency of collecting an evaporated substance, compared to the laser reduction device illustrated in FIG. 1. Therefore, in the present embodiment, the cylindrical adhesion medium 4 with a relatively large surface area is adopted in order to increase the adhesion area of the evaporated substance in the adhesion medium 4.

When the amount of an evaporated stored substance in the vessel 5 is increased, time required for allowing the predetermined amount of the evaporated substance to adhere to the adhesion medium 4 is shortened. Thus, in the present embodiment, the evaporated substance adhering to the adhesion medium 4 is collected by the collecting means 7 in order to preventing the adhesion efficiency of the evaporated substance from decreasing.

Although any configuration of the collecting means 7 is possible, one example is that the collecting means 7 can be configured by placing a collecting plate selectively comprising a cooling mechanism that promotes condensation of an evaporated substance, at a spacing of several millimeters from the surface of the cylindrical adhesion medium 4. The collecting plate preferably has a sharp end face. In such a manner, the evaporated substance can be collected since the evaporated substance is scraped off from the adhesion medium 4 by the collecting plate when the evaporated substance adheres to the surface of the adhesion medium 4 across the spacing.

### (Embodiment 4)

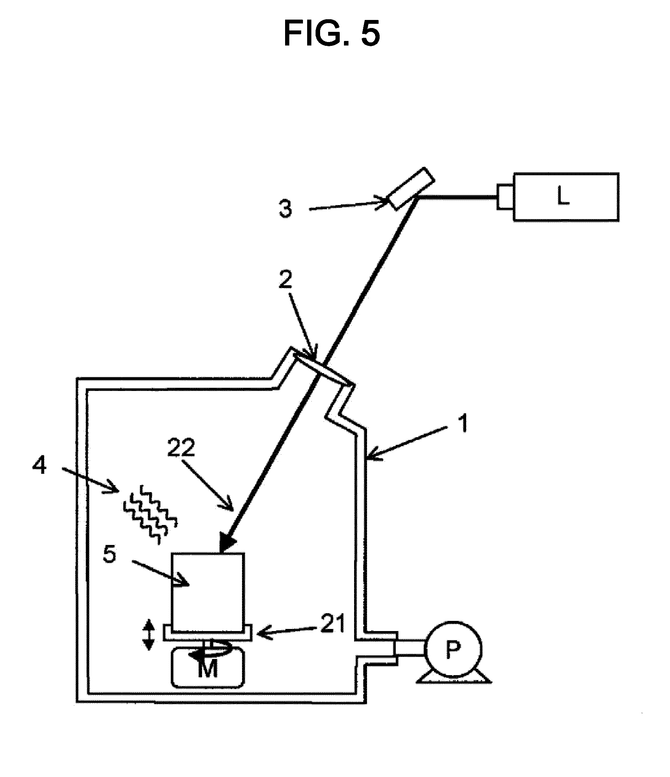

FIG. 5 is a schematic configuration view of a laser reduction device of an embodiment 4 of the present disclosure. FIG. 5 illustrates the laser reduction device obtained by changing the laser reduction device of FIG. 1 in such manners that:
(1) the tip of an introduction pipe for an inert gas and/or the like is placed to be in the vicinity of the top surface of a vessel 5; and
(2) an adhesion medium 4 comprising plural undulated plates is placed on a facing side across the vessel 5 with respect to the tip of the introduction pipe.

By irradiation with a laser by a laser irradiation device L while introducing an inert gas or the like from the introduction pipe into the vessel 5, the route of the evaporated substance of a stored substance in the vessel 5 is changed toward the adhesion medium 4 due to the inert gas or the like that has been introduced.

Since the adhesion medium 4 comprises the plural undulated plates, the inert gas or the like in itself passes between the plates. In such a case, concave and convex portions are formed since each plate is undulated, and the evaporated substance adheres to the adhesion medium 4 due to collision of the evaporated substance of the stored substance in the vessel 5 with a convex portion.

The structure of the adhesion medium 4 is illustrated as a mere example in FIG. 5, and an adhesion medium with a structure such as a diesel filter can also be used. In fact, in the case of the diesel filter, an inert gas and an evaporated substance are inhibited from passing, and therefore, the diesel filter desirably has a structure including a portion with which the evaporated substance collides and a portion through which the inert gas passes, like an undulated plate.

In the present embodiment, the explanations were given mainly taking, as an example, the case of allowing the mixture of magnesium oxide and silicon monoxide to be treated. However, potassium oxide or calcium oxide can be used instead of magnesium oxide. Carbon dioxide can also be curtailed by using carbon dioxide instead of silicon monoxide.

### Industrial Applicability

The present disclosure can be utilized in the field of a reduction device using a laser.

### Reference Signs List

- 1: Treatment chamber
- 2: Entrance window
- 3: Reflecting mirror
- 4: Adhesion medium
- 5: Vessel
- 7: Collecting means
- 9: Lens array

## Claims

1. A reduction device, irradiating a mixture or compound of a first oxide and a second oxide with a laser to thereby release oxygen from the first or second oxide.

2. The reduction device according to Claim 1, wherein the first oxide is magnesium oxide, potassium oxide, or calcium oxide.

3. The reduction device according to Claim 1, wherein the second oxide is carbon dioxide or silicon monoxide.

4. The reduction device according to Claim 1, wherein the second oxide is silicon monoxide generated by irradiating silicon dioxide with a laser to thereby release oxygen.

5. The reduction device according to Claim 1, comprising mixing means that generates the mixture by mixing the first oxide and the second oxide at a predetermined ratio.

6. The reduction device, wherein the mixture or the compound is irradiated with the laser on a condition that a temperature of not less than the boiling point of the mixture or the compound is applied.
